# EUROPÄISCHE PATENTANMELDUNG

(11) **EP 1 162 259 A1**
(43) Veröffentlichungstag der Anmeldung: **12.12.2001**
(21) Anmeldenummer: 00112346.2
(22) Anmeldetag: 09.06.2000
(51) Int. Cl.: C12C 11/00, C12G 1/022, C12N 9/00

(54) **Enzymmischungen enthaltend ein Enzym mit Beta-Glucanaseaktivität, ihre Verwendung zur Verminderung oder Vermeidung von Gushing**

(71) Anmelder: Danstar Ferment AG, 6304 Zug (CH)
(72) Erfinder: Burger, Karl, A-3550 Zeiselberg Nr. 18 (AT); Bach, Hans-Peter, Dipl.-Ing., D-54295 Trier (DE)
(74) Vertreter: Meyers, Hans-Wilhelm, Dr.Dipl.-Chem.

(57) **Zusammenfassung**

Verwendung eines Enzyms mit β-Glucanase Aktivität zur Verminderung oder Vermeidung eines spontanen Überschäumens von durch Gärungsprozesse hergestellten Erzeugnissen beim Öffnen von solche Erzeugnisse enthaltenden Behältern. Offenbart wird ebenfalls ein Verfahren zur Herstellung von Gärungsgetränken unter Verwendung eines Enzyms mit β-Glucanaseaktivität sowie Enzymmischungen mit β-Glucanaseaktivität.

## Beschreibung

Gegenstand der vorliegenden Erfindung ist die Verwendung eines Enzyms mit β-Glucanase Aktivität zur Verminderung oder Vermeidung eines spontanen Überschäumens von durch Gärungsprozesse hergestellten Erzeugnissen beim Öffnen von solche Erzeugnisse enthaltenden Behältern, ein Verfahren unter Verwendung dieses Enzyms, Gärungsgetränke erhältlich mittels des erfindungsgemäßen Verfahrens sowie Enzymmischungen.

Das spontane Überschäumen von durch Gärungsprozesse hergestellten Erzeugnissen, insbesondere Sekt, beim Öffnen dieser Erzeugnisse enthaltenden Behältern ist ein Phänomen, das vom Erzeuger und Konsumenten gleichermaßen nicht erwünscht ist. Bislang hat man sich nicht in der Lage gesehen, bereits bei der Herstellung von Sekt oder Bier, Vorkehrungen zu ergreifen, die das spontane Überschäumen des Produkts unterbinden würde. Das als Gushing bezeichnete Phänomen tritt nämlich in unberechenbarer Weise auf.

Überraschenderweise wird durch die erfindungsgemäße Verwendung eines Enzyms mit β-Glucanase Aktivität das spontane Überschäumen von durch Gärungsprozesse hergestellte Erzeugnisse beim Öffnen von solche Erzeugnisse enthaltenden Behältern vermindert oder vermieden.

Vorzugsweise ist das erfindungsgemäß einsetzbare Enzym eine natürlich vorkommende oder rekombinante β-Glucanase.

Zur Steuerung des Gärungsprozesses nützliche andere Bestandteile wie andere Enzyme können weiterhin in Zusammenwirkung mit der β-Glucanase verwendet werden. So ist der zusätzliche Einsatz von weiteren Enzymen wie Pektinesterase, Polygalacturonase und/oder Pektinlyase erfindungsgemäß möglich.

Gegenstand der vorliegenden Erfindung sind mithin auch Enzymmischungen enthaltend mindestens ein Enzym mit β-Glucanaseaktivität und mindestens zwei Enzyme mit einer Aktivität ausgewählt aus der Gruppe bestehend aus Pektinesterase, Polygalacturonase und/oder Pektinlyase. Die erfindungsgemäße Enzymmischung kann darüber hinaus auch weitere Enzyme oder andere Hilfsstoffe für die in Betracht kommenden Gärprozesse enthalten.

Die erfindungsgemäße Enzymmischung kann in Tablettenform oder als Pulver oder Granulat in fester Form vorliegen. Sie kann auch in flüssiger Form zusammengestellt vorliegen.

Gegenstand der vorliegenden Erfindung ist ein Verfahren zur Verminderung oder Vermeidung eines spontanen Überschäumens von durch Gärungsprozesse hergestellten Erzeugnissen beim Öffnen von solche Erzeugnisse enthaltenden Behältern, wobei ein Enzym mit β-Glucanase Aktivität vor oder bei der Gärungsstufe einem Gärungsansatz zugesetzt wird und der Gärungsprozess in Gegenwart des Enzyms mit β-Glucanase Aktivität durchgeführt wird, woraufhin sich eine Aufarbeitung des durch den Gärprozess hergestellten Erzeugnisses in an sich bekannter Weise anschließt.

In einer Ausführungsform des erfindungsgemäßen Verfahrens umfasst der Gärungsprozess die Gärungsstufe von Bier. Das erfindungsgemäße Verfahren ist in einer weiteren bevorzugten Ausführungsform zur Herstellung von Sekt geeignet. In diesem Falle umfasst der Gärungsprozess die zweite Gärungsstufe von Wein zu Sekt. Als Enzym wird vorzugsweise natürlich vorkommende oder rekombinante β-Glucanase eingesetzt.

Neben dem Enzym mit β-Glucanaseaktivität können im erfindungsgemäßen Verfahren weitere Enzyme wie Pektinesterase, Polygalacturonase und/oder Pektinlyase eingesetzt werden.

Vorzugsweise wird das Enzym mit β-Glucanaseaktivität in Mengen von 400 bis 800, insbesondere von 450 bis 750 Einheiten β-Glucanase je Hektoliter Gärungsansatz den jeweiligen Gärungsansätzen zugemischt.

Die Einheiten werden dabei nach BGX (units of Beta Glucanase-according industry standard) gemessen. Eine BGX-Einheit bezeichnet die Menge an Enzym, die innerhalb von einer Minute 1 µmol von reduzierendem Zucker (Glukose) aus Glukan erzeugt. Dabei ist das Substrat Beta-Glukan aus Botrytis cinerea (10 g/l), die Temperatur 30°C, der pH-Wert 4,40 und die Inkubationszeit 10 Minuten. Nach 10 Minuten folgt der Inkubation (1 ml Substrat + 1 ml verdünntes Enzym) werden 2 ml DNS (Dinitrosalicylsäure) zugesetzt und für 10 Minuten gekocht. Nach dem Abkühlen wird die Farbintensität bei 540 nm gemessen.

Bei Sekt oder Schaumwein aus Rotwein kann das Enzym mit β-Glucanaseaktivität in Mengen bis zu 1000 Einheiten β-Glucanase pro Hektoliter zugemischt werden.

Vorzugsweise wirkt das Enzym mit β-Glucanaseaktivität bei der Durchführung des erfindungsgemäßen Verfahrens zur Sektherstellung mindestens 2 - 3 Wochen auf den Gärungsansatz ein. Der Grundwein für die Sektgärung wird in üblicher Weise hergestellt. Eventuell eingesetzte Bentonitpräparate werden abgetrennt. Danach wird die benötigte Menge Enzym mit β-Glucanaseaktivität in Grundwein gelöst und bei Tankgärung dem Tankinhalt direkt beigemischt. Die Behandlungstemperatur sollte vorzugsweise über 10 °C liegen. Die Einwirkungszeit des erfindungsgemäßen Enzympräparates bei 15 -19 °C beträgt mindestens 2 - 3 Wochen, bei rotem Sekt kann auch 2 - 4 Wochen inkubiert werden.

Das erfindungsgemäße Verfahren kann bei allen für die Sektherstellung geläufigen und weinrechtlich zugelassenen Gärungsverfahren angewendet werden. Darüber hinaus können allgemein Schaumweine, Perlweine, weinähnliche Gärungsgetränke, wie z. B. Cidre, erfindungsgemäß behandelt werden.

Die durch das erfindungsgemäße Verfahren erhältlichen Gärungsgetränke neigen nicht mehr zum Gushing. Damit handelt es sich um neuartige Gärungsgetränke mit unerwarteten Eigenschaften. Diese Gärungsgetränke sind ebenfalls Gegenstand der vorliegenden Erfindung.

## Patentansprüche

1. Verwendung eines Enzyms mit β-Glucanase Aktivität zur Verminderung oder Vermeidung eines spontanen Überschäumens von durch Gärungsprozesse hergestellten Erzeugnissen beim Öffnen von solche Erzeugnisse enthaltenden Behältern.

2. Verwendung nach Anspruch 1, wobei das Enzym eine natürlich vorkommende oder rekombinante β-Glucanase ist.

3. Verwendung nach Anspruch 1 oder 2, wobei zusätzlich weitere Enzyme wie Pektinesterase, Polygalacturonase und/oder Pektinlyase eingesetzt werden.

4. Enzymmischung enthaltend mindestens ein Enzym mit β- Glucanase aktivität und mindestens zwei Enzyme mit einer Aktivität ausgewählt aus der Gruppe bestehend aus Pektinesterase, Polygalacturonase und/oder Pektinlyase.

5. Verfahren zur Verminderung oder Vermeidung eines spontanen Überschäumens von durch Gärungsprozesse hergestellten Erzeugnissen beim Öffnen von solche Erzeugnisse enthaltenden Behältern, wobei ein Enzym mit β-Glucanase Aktivität vor oder bei der Gärungsstufe einem Gärungsansatz zugesetzt wird und der Gärungsprozess in Gegenwart des Enzyms mit β-Glucanase Aktivität durchgeführt wird, woraufhin sich eine Aufarbeitung des durch den Gärprozess hergestellten Erzeugnisses in an sich bekannter Weise anschließt.

6. Verfahren nach Anspruch 5, wobei der Gärungsprozess die Gärungsstufe von Bier umfasst.

7. Verfahren nach Anspruch 5, wobei der Gärungsprozess die zweite Gärungsstufe von Wein zu Sekt umfasst.

8. Verfahren nach einem der Ansprüche 5 bis 7, wobei als Enzym natürlich vorkommende oder rekombinante β-Glucanase ist.

9. Verfahren nach einem der Ansprüche 5 bis 8, wobei neben dem Enzym mit β-Glucanaseaktivität weitere Enzyme wie Pektinesterase, Polygalacturonase und/oder Pektinlyase eingesetzt werden.

10. Verfahren nach einem der Ansprüche 5 bis 9, wobei das Enzym mit β-Glucanaseaktivität in Mengen von 400 bis 800 Einheiten β-Glucanase, gemessen nach BGX (units of Beta Glucanase-according industry standard) den jeweiligen Gärungsansätzen zugemischt werden.

11. Verfahren nach einem der Ansprüche 4 bis 10, wobei zur Sektherstellung das Enzym mit β-Glucanaseaktivität mindestens 2 - 3 Wochen auf den Gärungsansatz einwirkt.

12. Gärungsgetränk erhältlich durch ein Verfahren nach einem der Ansprüche 5 bis 11.
